**Europäisches Patentamt**

**European Patent Office**

**Office européen des brevets**

(19)

(11) Veröffentlichungsnummer : **0 322 424 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **C05F 9/02**

(21) Anmeldenummer : **88903231.4**

(22) Anmeldetag : **05.04.88**

(86) Internationale Anmeldenummer :
**PCT/EP88/00278**

(87) Internationale Veröffentlichungsnummer :
**WO 88/07507 06.10.88 Gazette 88/22**

(54) **VERFAHREN ZUM KOMPOSTIEREN VON ORGANISCHEN STOFFEN UND VORRICHTUNG ZUR DURCHFÜHRUNG DIESES VERFAHRENS.**

(30) Priorität : **03.04.87 DE 3711230**

(43) Veröffentlichungstag der Anmeldung :
**05.07.89 Patentblatt 89/27**

(45) Bekanntmachung des Hinweises auf die
Patenterteilung :
**25.03.92 Patentblatt 92/13**

(84) Benannte Vertragsstaaten :
**AT BE CH DE FR GB IT LI LU NL SE**

(56) Entgegenhaltungen :
**CH-A- 645 333**
**DE-A- 2 319 171**
**DE-A- 2 558 255**
**DE-A- 2 809 344**
**DE-A- 3 043 062**
**DE-A- 3 104 769**

(73) Patentinhaber : **Hofmann, Hermann
Riemannstrasse 1
W-6336 Solms-Niederbiel (DE)**
Patentinhaber : **Schnorr, Karl-Ernst
Niederaustrasse 6
W-6335 Lahnau-Atzbach (DE)**

(72) Erfinder : **Hofmann, Hermann
Riemannstrasse 1
W-6336 Solms-Niederbiel (DE)**
Erfinder : **Schnorr, Karl-Ernst
Niederaustrasse 6
W-6335 Lahnau-Atzbach (DE)**

(74) Vertreter : **Zinnecker, Armin, Dipl.-Ing.
Lorenz-Seidler-Gossel et al
Widenmayerstrasse 23
W-8000 München 22 (DE)**

EP 0 322 424 B1

## Beschreibung

Die Erfindung betrifft ein Verfahren zur aeroben, fermentativen Hydrolyse, insbesondere Kompostierung, von organischen Stoffen in einem geschlossenen Behälter nach dem Oberbegriff des Anspruchs 1 sowie eine Vorrichtung zur Durchführung dieses Verfahrens.

Ein derartiges Verfahren ist aus der DE-OS 28 09 344 bekannt.

Aus der DE-OS 34 01 889 ist ein verfahren zur aeroben, fermentativen Hydrolyse, insbesondere Kompostierung von organischen Stoffen in einem geschlossenen Behälter bekannt, bei dem den organischen Stoffen Frischluft zugeführt wird und bei dem die mit Wärme und Feuchtigkeit beladene Abluft abgeführt wird.

Die aerobe Fermentation (Rotte oder Kompostierung) von biologisch abbaubaren organischen Substanzen ist an ein aerobes Klima (Milieu) gebunden. Bestandteile eines aeroben Klimas sind: atmosphärische Luft, Feuchte und Wärmeenergie. Die Aufrechterhaltung eines dem Wachstum der aeroben Organismen angepaßten Klimas ist die wesentlichste Voraussetzung für eine, insbesondere bei der Abfallkompostierung erwünschte, schnellstmögliche Kompostierung.

Für die Klimatisierung menschlicher Lebensräume ist es bekannt, aus dem "Fermentationsraum" Stoffwechselprodukte, $CO_2$, Wasserdampf, Wärme und Gase, abzuführen und an ein gesundes Klima angepaßte Frischluft zuzuführen. Diese Methode wird, wie gesagt, bisher ausschließlich bei der Klimatisierung von menschlichen und tierischen Aufenthaltsräumen angewandt.

Bei der Kompostierung hingegen werden offene Systeme angewandt, bei denen die Frage der schadlosen Beseitigung der Stoffwechselprodukte bisher völlig offengeblieben ist. Allenfalls wurde ein kompostbelegtes Erdfilter zur Abluftreinigung vorgesehen.

Aufgabe der Erfindung ist es, bei einem Verfahren der eingangs angegebenen Art die ansonsten auftretende Belastung, insbesondere Geruchsbelastung, der Atmosphäre zu vermeiden. Eine weitere Aufgabe der Erfindung besteht darin, eine Vorrichtung zur Durchführung des erfindungsgemäßen Verfahrens anzugeben.

Erfindungsgemäß werden diese Aufgaben durch das im Anspruch 1 angegebene Verfahren und die im Anspruch 13 angegebene Vorrichtung gelöst.

Nach dem erfindungsgemäßen Verfahren wird die Abluft gekühlt, so daß die Feuchtigkeit auskondensiert. Anschließend wird die Abluft mit Umgebungstemperatur und ohne Feuchtigkeit an die Atmosphäre abgeleitet. Durch die Abkühlung der Abluft wird erreicht, daß die in dieser Abluft enthaltene Feuchtigkeit im wesentlichen vollständig auskondensiert. Die derart gekühlte und getrocknete Abluft kann anschließend mit Umgebungstemperatur und ohne bzw. mit geringerer Feuchtigkeit an die Atmosphäre abgeleitet werden. Die bisher auftretende Geruchsbelästigung wird dadurch vermieden. Die Abluft wird vor der Abgabe an die Atmosphäre nicht nur gekühlt und getrocknet, sondern zusätzlich noch durch das aus dem Kondensat bestehende Wasserbad gereinigt. Die desodorierenden antibakteriellen Eigenschaften des Kondensats sind besonders groß.

Vorteilhafte Weiterbildungen des erfindungsgemäßen Verfahrens sind in den Unteransprüchen beschrieben. Vorzugsweise wird die Wärme der Abluft durch einen Luft-Luft-Wärmetauscher auf die zugeführte Frischluft übertragen. Diese Verfahrensweise ist besonders energiesparend, da die ohnehin zuzuführende Frischluft gleichzeitig dazu verwendet wird, die Abluft zu kühlen. Weiterhin wird dadurch die Frischluft vor der Zuführung zu den organischen Stoffen erwärmt, was eine weitere Energieeinsparung mit sich bringt.

Es ist auch möglich, die Wärme der Abluft durch einen Luft-Wasser-Wärmetauscher abzuführen. Die abgeführte Wärme kann unmittelbar genutzt werden; sie kann aber auch durch eine Wärmepumpe genutzt werden. Die Abluft kann einem Motor, vorzugsweise Dampfmotor, zur Erzeugung mechanischer und/oder elektrischer Energie zugeführt werden.

Das Kondensat der Feuchtigkeit aus der Abluft kann zur Beregnung von Pflanzen verwendet werden. Es kann auch zur Herstellung von Trinkwasser mittels Ionenaustauscher, Aktivkohlefiltern oder Ähnlichem verwendet werden.

Vorzugsweise wird die pro Zeiteinheit zugeführte Frischluftmenge und damit Sauerstoffmenge in Abhängigkeit von der Temperatur und/oder dem Sauerstoffgehalt und/oder der Feuchtigkeit in den organischen Stoffen und/oder in der Abluft nach dem Austritt aus den organischen Stoffen gesteuert. Hierdurch kann der Prozeß optimal durchgeführt werden.

Die gekühlte und getrocknete Abluft kann durch einen Filter, vorzugsweise einen Sorptionsfilter, insbesondere ein Sorptionsfilterbett aus Kompost und/oder aus Aktivkohle, in die Atmosphäre geleitet werden. Derartige Filter zur Filterung der Abluft sind an sich bekannt. Bisher wurde jedoch die noch warme und feuchte Abluft über die Filter geleitet. Wenn die Abluft gekühlt und getrocknet wird, bevor sie durch den Filter geleitet wird, ergibt sich der wesentliche Vorteil, daß das aus der feuchten Abluft auskondensierte Kondensat weniger schadstoffbelastet ist, da es nicht mit den meist organischen Filterstoffen in Berührung kommt. Das Kondensat kann daher Trinkwasserqualität oder annähernd Trinkwasserqualität haben.

Der Wärmeaustausch im Wärmetauscher kann an den Grenzflächen zwischen der angesaugten Frischluft und der ausgetragenen Abluft unmittelbar erfolgen. Es ist aber auch möglich, das Verfahren in der Weise durchzuführen, daß der Wärmetransport von der Abluft zu der Frischluft durch ein Wärmeträgermedium in Wärmetauschern erfolgt. Die Wärme der Abluft wird also zunächst über einen ersten Wärmetauscher dem Wärmeträgermedium zugeführt. Das Wärmeträgermedium gibt die Wärme dann an die Frischluft ab. Durch diese Verfahrensweise können die Wärmeabführung von der Abluft einerseits und die Wärmezuführung an die Frischluft andererseits räumlich getrennt durchgeführt werden.

Vorzugsweise wird eine Teilmenge der Abluft nach der Kühlung und Trocknung der Frischluft zugemischt, vorzugsweise in Strömungsrichtung nach dem Wärmetauscher (falls vorhanden). Hierdurch wird der Frischluftbedarf reduziert.

Die Abluft oder ein Teil der Abluft kann durch ein Kühlaggregat abgekühlt werden. Dies ist insbesondere bei höheren Außentemperaturen von Vorteil bzw. erforderlich, da dann die Temperaturdifferenz zwischen der Abluft und der Frischluft möglicherweise nicht groß genug ist.

Die der Erfindung zugrundeliegende Aufgabe wird weiterhin durch eine Vorrichtung nach Anspruch 13 gelöst. Der Fermentationsbehälter ist allseits geschlossen. Es ist ein Wärmetauscher vorgesehen, in dem die Wärme der Abluft an ein Wärmeübertragungsmedium abgegeben wird, so daß die Feuchtigkeit der Abluft auskondensiert wird. Dadurch, daß der Fermentationsbehälter geschlossen ist, wird ein unkontrolliertes Entweichen von Abluft verhindert. Die Abluft wird in dem Wärmetauscher gekühlt und getrocknet. Sie kann dann ohne Geruchsbelästigung an die Atmosphäre abgelassen werden. In dem Wärmetauscher ist vorzugsweise eine untere Trägerfläche zur Sammlung des Kondensats vorgesehen, so daß die gekühlte und getrocknete Abluft vor ihrer Ableitung in die Atmosphäre durch das Kondensat geleitet wird.

Vorzugsweise besteht der Wärmetauscher aus einem Luft-Luft-Wärmetauscher, bei dem das Wärmeübertragungsmedium die zugeführte Frischluft ist. Der Wärmetauscher kann auch ein Luft-Wasser-Wärmetauscher sein. Es ist möglich, eine Wärmepumpe zur Nutzung der abgeführten Wärme und/oder einen Motor, vorzugsweise einen Dampfmotor, zu Erzeugung mechanischer und/oder elektrischer Energie aus der Wärme der Abluft vorzusehen.

Vorzugsweise ist ein Ionenaustauscher oder Aktivkohlefilter oder dergleichen zur Herstellung von Trinkwasser aus dem Kondensat der Feuchtigkeit der Abluft vorhanden.

Eine vorteilhafte Weiterbildung der erfindungsgemäßen Vorrichtung ist gekennzeichnet durch einen oder mehrere Meßaufnehmer zur Steuerung der pro Zeiteinheit zugeführten Frischluft-(Fortsetzung mit Seite 6 der ursprünglich eingereichten Beschreibung.) menge und damit Sauerstoffmenge in Abhängibkeit von der Temperatur und/oder dem Sauerstoffgehalt und/oder der Feuchtigkeit in den organischen Stoffen und/oder in der Abluft nach dem Austritt aus dem organischen Stoffen. Der Prozeß kann dadurch optimiert werden.

Vorzugsweise ist ein Filterbehälter mit einem Filter, vorzugsweise einem Sorptionsfilter, insbesondere einem Sorptionsfilterbett aus Kompost und/oder aus Aktivkohle zur Filterung der gekühlten und getrockneten Abluft vorgesehen, wobei vorzugsweise die Filtermasse in dem Filterbehälter auf luftdurchlässigen Ebenen gelagert ist. Hierdurch wird die gekühlte und getrocknete Abluft nochmals gereinigt, bevor sie an die Atmosphäre übergeben wird. Weiterhin gelangt nur die getrocknete und gekühlte Abluft, nicht jedoch die noch feuchte und warme Abluft, mit dem Filter in Berührung. Da der Filter meist aus organischen Filterstoffen besteht, können diese daher das kondensat nicht verunreinigen. Das kondensat hat also eine sehr gute Wasserqualität.

Vorzugsweise ist in der Zuluftleitung in Strömungsrichtung vor dem Wärmetauscher eine Drosselklappe und/oder in der Abluftleitung in Strömungsrichtung unmittelbar vor der Atmosphäre eine Drosselklappe angeordnet. Hierdurch kann der Luftdurchsatz gesteuert werden.

Vorzugsweise ist der Frischluftraum um den Fermentationsraum herum ausgebildet und befinden sich in diesem Raum frei aufgestellt die abluftbegrenzenden Flächen.

Besonders vorteilhaft ist es, wenn Wärmetauscher, Kondensatsammler, Gebläse, Sorptionsfilter, Meß- und Steuergeräte eine kompakte, zusammenhängende Einheit bilden, die nur jeweils einen Luftanschluß für die Frischluftzuführung zum Fermentationsraum und eine Abluftabführung aus dem Fermentationsraum aufweist.

In der Abluftleitung kann eine wahlweise betätigbare, die Abluftleitung ganz oder teilweise schließende Steuerklappe angeordnet sein, an die sich eine Bypassleitung anschließt. In der Bypassleitung kann ein Kühlaggregat zur Kühlung der Abluft angeordnet sein, von dem die Abluft dem Wärmetauscher zugeführt wird.

Vorzugsweise ist eine schließbare und aufsteuerbare Lüftungsklappe zur Zumischung von gekühlter und getrockneter Abluft zu der dem Fermentationsbehälter zugeführten Frischluft in Strömungsrichtung nach dem Wärmetauscher vorgesehen. Hierdurch wird der Frischluftbedarf vermindert.

Es kann ein weiterer Wärmetauscher zur Übertragung der Wärme der Abluft über das Wärmeträgermedium des weiteren Wärmetauschers auf die zugeführte Frischluft vorhanden sein. Hierdurch können die Wärmeübertragung von der Abluft einerseits und auf die Frischluft andererseits an räumlich getrennten Stellen durchgeführt werden.

Durch die Erfindung kann angesichts der Tatsache, daß Abfallkompostierung immer mit der Bildung gas-

3

und dampfförmiger Stoffwechselprodukte verbunden ist, der Fermentationsraum so klimatisiert werden, daß nicht nur eine Verdrängung der Stoffwechselprodukte durch Frischluft erreicht wird, sondern daß diese Produkte in einen umweltverträglichen Zustand überführt werden und daß gleichzeitig der energetische Aufwand zur Klimaregelung auf die unbedingt notwendige Größe beschränkt bleibt.

Die Erfindung berücksichtigt also die Tatsache, daß die aus einer fermentierenden Masse infolge Verdrängung und/oder Spülung austretenden Gase bzw. Dämpfe durch Wärmeentzug zu resublimieren bzw. auszukondensieren sind, indem Wärme daraus direkt oder indirekt über Wärmetauscher auf die Frischluft übertragen oder wahlweise über einen Kühlkreislauf abgeführt bzw. über eine angeschlossene Wärmepumpe genutzt und damit neben dem Kondensationseffekt noch ein Energiespareffekt erreicht wird. Die noch in der Abluft verbleibenden Reste von umweltbelastenden Stoffwechselprodukten werden anschließend sorptiv an sorptionsfähigen Körpern (z.B. Biofilter, Aktivkohlefilter, Ionentauscher oder Silikagel) abgeschieden. Bei der Wärmeübertragung bestimmt die Temperatur-Differenz zwischen Frischluft und Abluft die abführbare Kondensationswärmemenge aus der Abluft und somit den Abscheidegrad für resublimierbare und kondensierbare Abluftbestandteile.

Die aus einem aeroben Fermentationsprozeß austretenden Gase und Dämpfe treten nur dann als überriechende Stoffwechselprodukte in Erscheinung, wenn ihre Temperatur höher ist als die der den fermentierenden Organismen zugeführten Frischluft. Bei steigender Ablufttemperatur und steigenden Dampfanteilen kondensieren diese auf den frischluftgekühlten Flächen aus. Infolge des hohen Sauerstoffangebotes im Kondensat und fehlendem biologischem Nährboden entsteht ein flüssiges, umweltneutrales Stoffwechselprodukt.

In einem praktischen Beispiel wurde ein Gemisch aus Haushalt- und Gartenabfällen mit dem erfindungsgemäßen Verfahren in einer erfindungsgemäßen Vorrichtung verarbeitet. Hierbei ergab sich ein flüssiges, umweltneutrales Stoffwechselprodukt (Kondensat) mit folgender nur biologisch bedingter durchschnittlich physikalisch chemischen Zusammensetzung:

```
Elektr. Leitfähigkeit                      640      µS/cm
pH-Wert:                                    7,87
Sauerstoff (O2):                            6,5     mg/l
Säurekapazität pH 4,3 (m-Wert):             7,5     mval/l
Kohlensäure "freie CO2":                   14,2     mg/l
Kohlensäure, gebunden:                    165,0     mg/l
Kohlensäure, zugehörig:                   122,2     mg/l
Kohlensäure, rostschutzverhindernd:         n.n.    mg/l
Kalkaggressive CO2
(Marmorlöseversuch n. Heyer):               n.n.    mg/l
Oxidierbarkeit mit Kaliumpermanganat:     34        mg/l
(als Kaliumpermanganatverbrauch)
BSB5                                      82        mg/l
CSB (Cr VI - III) (O2)                   109        mg/l
Sogenannte Nichtkarbonathärte:            0,0       °dH
Härtebereich: 1 (nach § 7 Abs. 1 Ziff. 4 des Wasch-
                   mittelgesetzes vom 20. 8. 75)
```

Wasserhinhaltsstoffe

| Bezeichnung | angegeben als | Nachweis- grenze mg/1 | ermittelter Wert mg/1 |
|---|---|---|---|
| Eisen, gesamt | Fe | 0,02 | 0,18 |
| Mangan | Mn | 0,01 | 0,04 |
| Kupfer | Cu | 0,02 | 0,02 |
| Zink | Zn | 0,02 | 0,06 |
| Natrium | Na | 0,1 | 0,1 |
| Kalium | K | 0,1 | 0,6 |
| Calcium | Ca | 1,0 | n.n. |
| Magnesium | MG | 0,1 | n.n. |
| Ammonium | $NH_4^+$ | 0,01 | 0,09 |
| Nitrit | $NO_2^-$ | 0,02 | 0,05 |
| Nitrat | $NO_3^-$ | 0,3 | 0,7 |
| Chlorid | $Cl^-$ | 1 | n.n. |
| Sulfat | $SO_4^{2-}$ | 2 | n.n. |
| Phosphat, ortho | $PO_4^{3-}$ | 0,02 | n.n. |
| Hydrogenkarbonat | $HCO_3^-$ | 3 | 457 |
| Silikat | $SiO_2$ | 0,2 | 1,7 |

n.n. = nicht nachweisbar

Die Untersuchung von Kondensat ergab, daß die Qualität des Kondensates eine direkte Einleitung in einen Vorfluter erlaubt. Die Wasserqualität ist mit einem gereinigten Abwasser aus einer Kläranlage vergleichbar.

Die Frischluftzufuhr wird dem biologischen Sauerstoffver-brauch der Organismen angepaßt, welcher kontinuierlich gemesser wird. Für eine wirtschaftlich vorteilhafte Betreibung empfiehlet sich die Regelung der Frischluftzufuhr zwischen Sollwerten von 17 bis 19 Vol.-% Luftsauerstoffgehalt in der fermentierenden Abfallmasse.

Aufgrund der Wärmebedingten, aufwärtsgerichteten Thermik in der fermentierenden Abfallmasse ist es vorteilhaft, die Frischluft von unten in die, auf einem luftdurchlässigen Boden lagernde poröse Abfallmasse einzuleiten und oben nach dem Austritt auf kürzestem Wege abzuleiten. Die den Fermentationsraum begrenzenden Decken und Wände sind vorzugsweise wärmeisoliert, um nicht gewünschte Kondensationsflächen zu vermeiden und an der Wärmetauscherfläche zwischen Frischluft und Abluft eine möglichst große Temperaturdifferenz zu erhalten. Wenn eine Wärmenutzung - z.B. im Sommer - nicht erwünscht ist, besteht eine vorteilhafte Ausführungsform der Erfindung darin, daß das den Lufttransport gewährleistende Gebläse die Frischluft über den Wärmetauscher ansaugt und durch die fermentierende Abfallmasse sowie Wärmetauscher und Sorptionsfilter in die freie Atmosphäre fördert.

Die erfindungsgemäße Vorrichtung mit sauerstoff- und temperaturabhängiger Regelung kann an jeden fremdbelüfteten Aerobenfermenter, gleich welcher Größe, angeschlossen werden. Es entstehen keine umweltbelastenden Stoffwechselprodukte und die bisherigen Betriebskosten für die elektrische Energie zur Kondensation durch Kühlung werden auf ca. ein Drittel gesenkt.

Wenn eine Wärmegewinnung sich als vorteilhaft erweist und gewünscht ist, so kann die durch Kühlung abgeführte Kondensationswärme über eine Wärmepumpe genutzt werden. Die dabei zu erzielenden Leistungszahlen können Werte über 4 erreichen.

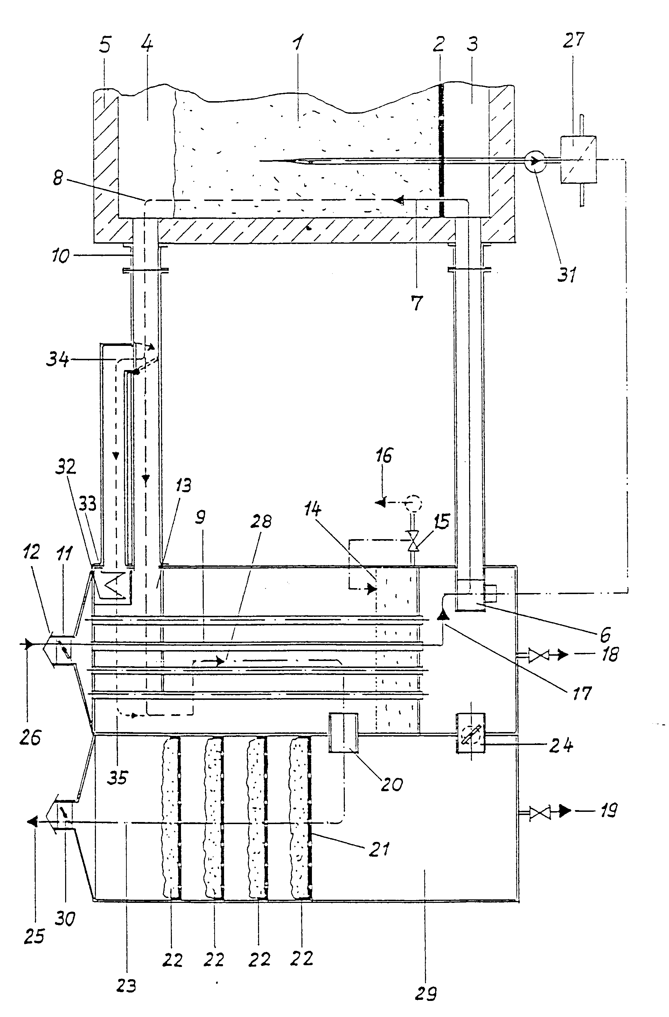

Ein Ausführungsbeispiel der Erfindung wird nachstehend anhand der beigefügten Zeichnung im einzelnen erläutert. In der Zeichnung zeigt die

einzige Figur  ein Ausführungsbeispiel einer erfindungsgemäßen Vorrichtung zur Durchführung des erfindungsgemäßen Verfahrens.

In dem allseits geschlossenen Fermentationsbehälter 5 sind auf einer luftdurchlässigen Ebene 2 die organischen Stoffe 1 gelagert. Unterhalb der durchlässigen Ebene 2 befindet sich der Luftkastenraum 3. Über den organischen Stoffen 1 befindet sich der Hohlraum 4.

Über eine Zuluftleitung und eine Abluftleitung ist der geschlossene Fermentationsbehälter 5 mit einem weiteren, den Wärmetauscher aufnehmenden bzw. bildenden Behälter verbunden. Im oberen Deckel dieses Behälters ist die Zuluftleitung 12 angeordnet, in der sich eine schließbare und aufsteuerbare Drosselklappe 11 befindet. Darunter sind die senkrecht verlaufenden Wärmetauscherrohre 9 angeordnet, die in einer oberen Platte münden und bis zu einer unteren Platte reichen. Die durch die Zuluftleitung 12 einströmende Luft strömt also durch diese Wärmetauscherrohre 9, nicht jedoch durch sonstige Bereiche des Wärmetauscherbehälters. Nach dem Durchströmen der Wärmetauscherrohre 9 gelangt die mittlerweile erwärmte Frischluft in den Bereich 17 des Wärmetauscherbehälters. Sie wird von dort durch das Gebläse 6 über die Frischluftleitung dem Luftkastenraum 3 des Fermentationsbehälters 5 zugeführt.

Die beladene Abluft 8 gelangt von dem Hohlraum 4 über die Abluftleitung 10 in den die Wärmetauscherrohre 9 umgebenden Raum 13 des Wärmetauscherbehälters. Beim Durchströmen 28 diesen Raumes wird der Abluft die Wärme entzogen. Das Kondensat 14 sammelt sich auf der unteren Trägerfläche für die Wärmetauscherrohre 9. Es kann von dort durch das Ventil 15 abgelassen werden. Das Ventil 15 kann durch einen Schwimmerschalter gesteuert werden, wie durch den von dem Ventil 15 zu dem Kondensat 14 verlaufenden, strichpunktierten Pfeil angedeutet. Das Kondensat wird in Strömungsrichtung hinter dem Ventil 15 gesammelt und kann von dort weitergeleitet (vgl. Bezugsziffer 16) werden.

In der Abluftleitung 10 ist eine Steuerklappe 34 vorgesehen, die schwenkbar gelagert und schließbar sowie aufsteuerbar ist. Normalerweise befindet sich diese Klappe in der durchgezogen gezeichneten Stellung, so daß die Abluft direkt dem Wärmetauscher zugeführt wird. Falls eine zusätzliche Kühlung der Abluft erforderlich sein sollte, wird die Steuerklappe 34 in die gestrichelt gezeichnete Stellung verschwenkt. Die Abluft durchströmt dann ganz oder teilweise die parallel zur Abluftleitung angeordnete Bypassleitung. Am Ende der Bypassleitung ist in dem Wärmetauscherbehälter ein Kühlaggregat 32, 33 angeordnet, durch das der durch die Bypassleitung geströmten Abluft Wärme entzogen wird, bevor ein weiterer Wärmeentzug in dem eigentlichen Luft-Luft-Wärmetauscher erfolgt.

Am Boden des Wärmetauscherbehälters ist ein weiteres Ventil 18 zur Ableitung von Kondensat vorgesehen, das sich eventuell in diesem Bereich des Wärmetauscherbehälters gebildet hat.

Unmittelbar neben dem Wärmetauscherbehälter ist ein Filterbehälter 29 angeordnet. Der Wärmetauscherbehälter und der Filterbehälter 29 sind durch eine kurze Rohrleitung 20 miteinander verbunden. In dem Filterbehälter 29 befinden sich mehrere übereinander angeordnete, waagerechte, luftdurchlässige Ebenen 21, auf denen jeweils Biofiltermasse 22 gelagert ist. Der obere Deckel des Filterbehälters 29 besitzt ein Abluftrohr, in dem eine Drosselklappe 30 zur Steuerung des Abluftstromes vorgesehen ist. Im Boden des Filterbehälters 29 befindet sich ein Ablaßventil 19 zur Abführung eventuell gebildeten Kondensats. Der Filterbehälter 29 ist über die Leitung 24 mit dem unteren, außerhalb des eigentlichen Wärmetauschers liegenden Teil des Wärmetauscherbehälters verbunden. In der Rohrleitung 24 befindet sich eine schließbare und aufsteuerbare Steuerklappe.

Wärmetauscher, Kondensatsammler, Gebläse, Sorptionsfilter, Meßund Steuergeräte bilden eine kompakte, zusammenhängende Einheit, die nur jeweils einen Luftanschluß 12 für die Frischluftzuführung zum Fermentationsraum 5 und eine Abluftabführung 25 aus dem Fermentationsraum 5 aufweist. Es ist auch möglich, Frischluft über einen Bypass in den Kreislauf einzuführen, ohne daß diese Frischluft vorher über den Wärmetauscher geleitet wird; diese Möglichkeit ist in der Zeichnung nicht dargestellt. Die Vorrichtung weist eine Sonde zur Ermittlung der Klima-Kennwerte auf. Diese Sonde befindet sich in dem Fermentationsbehälter 5 und endet innerhalb der organischen Stoffe 1. Durch eine Membranpumpe 31 kann aus dem Inneren der organischen Stoffe 1 eine Luftprobe entnommen und einer Sauerstoff- und/oder Temperaturmeßvorrichtung 27 zugeführt werden. Letztere kann die Drehzahl des Gebläses 6 steuern bzw. regeln, wie durch die doppelt strichpunktierte Linie zwischen der Meßvorrichtung 27 und dem Gebläse 6 angedeutet. Die gesamte Vorrichtung ist unmittelbar an Abfallcontainer, Kompostierungsboxen, Bioreaktoren, Biozellenreaktoren und oder Tierställe anschließbar. Schließlich weist die Vorrichtung zusätzlich einen Wärmetauscher (35) zum Anschluß an einen Kühler und/oder eine Wärmepumpe auf; dieser zusätzliche Wärmetauscher 35 ist in der Zeichnung lediglich angedeutet.

In der nachstehenden Beschreibung des Verfahrens und der Vorrichtung werden drei besonders vorteilhafte Ausführungsformen in Zusammenkzeug mit der Erfindung sowie deren jeweilige Anwendung beschrieben.

1. Betrieb ohne Wärmerückgewinnung mit Luft/Luft-Kühlung

Unabhängig von der Größe des allseits geschlossenen Fermentationsbehälters 5 wird über den Anschlußstutzen 17 durch das Gebläse 6 über den Frischlufstutzen 12 mit Schutzhaube und Drosseklappe 11 die Frischluft 26 durch die Wärmetauscherrohre 9 angesaugt und in den Luftkastenraum 3 eingeblasen. Danach strömt die erwärmte Frischluft durch die Öffnungen in dem Boden 2 in die aerob zu fermentierende Masse 1 und nimmt auf dem Weg 7 unter Abgabe von Sauerstoff die entstehenden Stoffwechselprodukte Wasser, Kohlendioxyd, Wärme, Dämpfe und Gase auf und führt sie über die Austrittsöffnung 8 aus dem Hohlraum 4 ab. Danach gelangt die beladene Abluft 8 über die Verbindung 10 in den von der Frischluft getrennten Raum 13. Beim Durchströmen 28 des zwischen den Wärmetauscherrohren 9 befindlichen freien Raumes 28 wird durch Wärmeentzung die Kondensation der von der Luft mitgeführten kondensierbaren Bestandteile herbeigeführt. Die so gereinigte Luft tritt danach über die Verbindung 20 in den Raum 29 ein, in dem auf luftdurchlässigen Ebenen 21 die sorptiv wirkende Biofiltermasse 22 lagert, an deren Oberflächen Organismen die sorptiv aufgenommenen Partikel fermentativ umwandeln bzw. in ihren Körper einbauen. Die so gereinigte Abluft (23) tritt über den Stutzen 30 mit Drosselklappe und Abdeckhaube in die Atmosphäre frei aus. Die durch Kondensation flüssig gewordenen Stoffwechselprodukte 14 der aus der Masse 1 entfernten Abluft, werden über eine Kondensatentleerung 15 in biologisch gereinigter Abwasserqualität eingeleitet 16. Mit den Ventilen 18 und 19 wird das sich eventuell am Boden sammelnde Kondensat abgeleitet. Mit dem 3-Wege-Ventil 24 kann entfeuchtete Abluft mit noch ausreichendem Sauerstoffgehalt im Kreislauf wieder in den Fermenter 5 zurückgeführt werden, oder Frischluft ohne Erwärmung in den Luftstrom eingemischt werden. Das Gebläse 6 wird über die mit der Lanze 27 gemessenen Werte für Sauerstoff und Temperatur einund ausgeschaltet. Als Richtgröße gelten die der menschlichen Atemluft angepaßten Werte von 17 bis 20 Vol.% Sauerstoff und einer Mindestentseuchungstemperatur von größer als 50°C. Die Bestimmung des Sauerstoffgehaltes erfolgt mit einer elektrochemischen Flüssigkeitszelle bestehend aus Elektrolyt und zwei Metallelektroden, die mit einer elektronischen Umsetzungsvorrichtung verbunden sind. Durch eine Membranpumpe 31 wird aus dem Innern der Masse 1 eine Luftprobe entnommen und der Sauerstoff- bzw. Temperaturmeßvorrichtung zugeführt. Auf diese Weise kann das günstigste, den biologischen Stoffwechsel angepaßte Klima hergestellt werden.

2. Betrieb ohne Wärmerückgewinnung, jedoch mit Luft/Wasser-Kühlung

Sollte die angesaugte Frischlufttemperatur - z.B. im Sommer - so hoch liegen, daß aufgrund eines zu gerinen Temperaturunterschiedes zwischen Frisch- und Abluft bzw. einer zu hohen Taupunkttemperatur zu wenig Feuchte aus der Abluft entzogen wird und es daher zu Geruchsbelästigungen kommt, so wird duch eine Steuer-klappe 34 der Abluffweg über den Wärmetauscher 35 geführt, der an ein Kühlaggregat 32 angeschlossen ist. Die weitere Luftführung entspricht der unter 1. bereits beschriebenen Ausführung.

3. Betrieb mit Wärmerückgewinnung durch Wärmepumpe

Da bei aerober Fermentation unter wirtschaftlichen Bedingungen das Leistungsverhältnis von aufzuwendender zu nutzbarer Energie von Bedeutung ist, sind die Betriebsweisen nach 1. und/oder 2. dann zu wählen, wenn biologisch erzeugte Wärme und/oder Kondensat nicht genutzt werden können. Kann Wärmeenergie oder/und Kondensat genutzt werden, so wird der Wärmetauscher 35 an eine Wärmepumpe angeschlossen. Die weitere Luftführung entspricht der unter 1. bereits beschriebenen Ausführung.

**Patentansprüche**

1. Verfahren zur aeroben, fermentativen Hydrolyse, insbesondere Kompostierung von organischen Stoffen (1) in einem geschlossenen Behälter (5), bei dem den organischen Stoffen (1) Frischluft zugeführt wird, bei dem die mit Wärme und Feuchtigkeit beladene Abluft abgeführt und gekühlt wird, so daß die Feuchtigkeit in Form eines Kondensats (14) auskondensiert, und bei dem die Abluft mit Umgebungstemperatur und ohne Feuchtigkeit an die Atmosphäre abgeleitet wird, **dadurch gekennzeichnet**, daß die gekühlte und getrocknete Abluft durch ein Wasserbad, nämlich das Kondensat (14), geleitet wird.

2. Verfahren nach Anspruch 1, dadurch gekennzeichnet, daß die Wärme der Abluft durch einen Luft-Luft-Wärmetauscher (9, 28) auf die zugeführte Frischluft übertragen wird.

3. Verfahren nach Anspruch 1 oder 2, dadurch gekennzeichnet, daß die Wärme der Abluft durch einen Luft-Wasser-Wärmetauscher abgeführt wird.

4. Verfahren nach einem der vorhergehenden Ansprüche, dadurch gekennzeichnet, daß die abgeführte Wärme unmittelbar genutzt wird und/oder durch eine Wärmepumpe genutzt wird.

5. Verfahren nach einem der vorhergehenden Ansprüche, dadurch gekennzeichnet, daß die Abluft einem Motor, vorzugsweise Dampfmotor, zur Erzeugung mechanischer und/oder elektrischer Energie zugeführt wird.

6. Verfahren nach einem der vorhergehenden Ansprüche, dadurch gekennzeichnet, daß das Kondensat (14) zur Beregnung von Pflanzen und/oder zur Herstellung von Trinkwasser mittels Ionenaustauschern, Aktivkohlefiltern oder Ähnlichem verwendet wird.

7. Verfahren nach einem der vorhergehenden Ansprüche, dadurch gekennzeichnet, daß die pro Zeiteinheit zugeführte Frischluftmenge und damit Sauerstoffmenge in Abhängigkeit von der Temperatur und/oder dem Sauerstoffgehalt und/oder der Feuchtigkeit in den organischen Stoffen (1) und/oder in der Abluft (4, 10) nach dem Austritt aus den organischen Stoffen (1) gesteuert wird.

8. Verfahren nach einem der vorhergehenden Ansprüche, dadurch gekennzeichnet, daß die gekühlte und getrocknete Abluft durch einen Filter (29), vorzugsweise ein Sorptionsfilter, insbesondere ein Sorptionsfilterbett (22) aus Kompost und/oder aus Aktivkohle, in die Atmosphäre geleitet wird.

9. Verfahren nach einem der vorhergehenden Ansprüche, dadurch gekennzeichnet, daß der Wärmeaustausch an den Grenzflächen des Wärmetauschers (9, 28) zwischen den angesaugten Frischluft und der ausgetragenen Abluft unmittelbar erfolgt.

10. Verfahren nach einem der vorhergehenden Ansprüche, dadurch gekennzeichnet, daß der Wärmetransport von der Abluft zu der Frischluft durch ein Wärmeträgermedium in Wärmetauschern erfolgt.

11. Verfahren nach einem der vorhergehenden Ansprüche, dadurch gekennzeichnet, daß eine Teilmenge der Abluft nach der Kühlung und Trocknung der Frischluft zugemischt (20, 24) wird, vorzugsweise in Strömungsrichtung nach dem Wärmetauscher (9, 28).

12. Verfahren nach einem der vorhergehenden Ansprüche, dadurch gekennzeichnet, daß die Abluft oder ein Teil der Abluft durch ein Kühlaggregat (32) abgekühlt wird.

13. Vorrichtung zur Durchführung des Verfahrens nach einem der vorhergehenden Ansprüche, bestehend aus einem Fermentationsbehälter (5) zur Aufnahme der zu verarbeitenden organischen Stoffe (1) mit einer Frischluftzuführung und einer Abluftabführung zur Ableitung der mit Wärme und Feuchtigkeit beladenen Abluft, wobei der Fermentationsbehälter (5) allseits geschlossen ist, ein Wärmetauscher (9, 28) vorgesehen ist, in dem die Wärme der Abluft an ein Wärmeübertragungsmedium abgegeben wird, so daß die Feuchtigkeit aus der Abluft in Form eines Kondensats (14) auskondensiert wird, und wobei Einrichtungen zum Leiten der durch Kühlung getrockneten Abluft durch das Kondensat (14) vorgesehen sind.

14. Vorrichtung nach Anspruch 13, dadurch gekennzeichnet, daß der Wärmetauscher (9, 28) ein Luft-Luft-Wärmetauscher ist und daß das Wärmeübertragungsmedium die zugeführte Frischluft ist.

15. Vorrichtung nach Anspruch 13 oder 14, dadurch gekennzeichnet, daß der Wärmetauscher ein Luft-Wasser-Wärmetauscher ist.

16. Vorrichtung nach einem der Ansprüche 13 bis 15, gekennzeichnet durch eine Wärmepumpe zur Nutzung der abgeführten Wärme und/oder durch einen Motor, vorzugsweise Dampfmotor, zur Erzeugung mechanischer und/oder elektrischer Energie aus der Wärme der Abluft.

17. Vorrichtung nach einem der Ansprüche 13 bis 16, gekennzeichnet durch einen Ionenaustauscher oder Aktivkohlefilter oder dergleichen zur Herstellung von Trinkwasser aus dem Kondensat (14) der Feuchtigkeit der Abluft.

18. Vorrichtung nach einem der Ansprüche 13 bis 17, gekennzeichnet durch einen oder mehrere Meßaufnehmer zur Steuerung der pro Zeiteinheit zugeführten Frischluftmenge und damit Sauerstoffmenge in Abhängigkeit von der Temperatur und/oder dem Sauerstoffgehalt und/oder der Feuchtigkeit in den organischen Stoffen (1) und/oder in der Abluft (4, 10) nach dem Austritt aus den organischen Stoffen (1).

19. Vorrichtung nach einem der Ansprüche 13 bis 18, gekennzeichnet durch einen Filterbehälter (29) mit einem Filter, vorzugsweise Sorptionsfilter, insbesondere Sorptionsfilterbett (22) aus Kompost und/oder aus Aktivkohle zur Filterung der gekühlten und getrockneten Abluft, wobei vorzugsweise die Filtermasse (22) in dem Filterbehälter (29) auf luftdurchlässigen Ebenen (21) gelagert ist.

20. Vorrichtung nach einem der Ansprüche 13 bis 19, dadurch gekennzeichnet, daß in der Zuluftleitung in Strömungsrichtung vor dem Wärmetauscher eine Drosselklappe (11) und/oder in der Abluftleitung in Strömungsrichtung unmittelbar vor der Atmosphäre eine Drosselklappe (30) angeordnet ist.

21. Vorrichtung nach einem der Ansprüche 13 bis 20, dadurch gekennzeichnet, daß der Frischluftraum um den Fermentationsraum herum ausgebildet ist und daß sich in diesem Raum frei aufgestellt die abluftbegrenzenden Flächen befinden.

22. Vorrichtung nach einem der Ansprüche 13 bis 21, dadurch gekennzeichnet, daß Wärmetauscher, Kondensatsammler, Gebläse, Sorptionsfilter, Meß- und Steuergeräte eine kompakte, zusammenhängende Einheit bilden, die nur jeweils einen Luftanschluß (12) für die Frischluftzuführung zum Fermentationsraum (5) und eine Abluftabführung (25) aus dem Fermentationsraum (5) aufweist.

23. Vorrichtung nach einem der Ansprüche 13 bis 22, dadurch gekennzeichnet, daß in der Abluftleitung (10) eine wahlweise betätigbare, die Abluftleitung ganz oder teilweise schließende Steuerklappe (34) angeordnet ist, an die sich , eine Bypassleitung anschließt, und daß in der Bypassleitung ein Kühlaggregat (32) zur Kühlung der Abluft angeordnet ist, von dem die Abluft dem Wärmetauscher (9, 28) zugeführt wird.

24. Vorrichtung nach einem der Ansprüche 13 bis 23, gekennzeichnet durch eine schließbare und aufsteuerbare Lüftungsklappe (24) zur Zumischung vom gekühlter und getrockneter Abluft zu der dem Fermentationsbehäter (5) zugeführten Frischluft in Strömungsrichtung nach dem Wärmetauscher (9, 28).

25. Vorrichtung nach einem der Ansprüche 13 bis 24, gekennzeichnet durch einen weiteren Wärmetauscher zur Übertragung der Wärme der Abluft über das Wärmeträgermedium des weiteren Wärmetauschers auf die zugeführte Frischluft.

## Claims

1. A process for aerobic fermentative hydrolysis, in particular composting of organic substances (1) in a closed container (5), wherein fresh air is supplied to the organic substances (1), wherein the used air which is loaded with heat and moisture is removed and cooled so that the moisture condenses out in the form of a condensate (14), and wherein the used air is carried off to the atmosphere at ambient temperature and without moisture, characterised in that the cooled and dried used air is passed through a water bath, namely the condensate (14).

2. A process according to claim 1 characterised in that the heat of the used air is transferred to the supplied fresh air by an air-air heat exchanger (9, 28).

3. A process according to claim 1 or claim 2 characterised in that the heat of the used air is removed by an air-water heat exchanger.

4. A process according to one of the preceding claims characterised in that the heat removed is used directly and/or is used by a heat pump.

5. A process according to one of the preceding claims characterised in that the used air is supplied to a motor, preferably a vapour motor, for the production of mechanical and/or electrical energy.

6. A process according to one of the preceding claims characterised in that the condensate (14) is used for spraying plants and/or for the production of drinking water by means of ion exchangers, activated carbon filters or the like.

7. A process according to one of the preceding claims characterised in that the amount of fresh air and thus the amount of oxygen which is supplied per unit of time is controlled in dependence on the temperature and/or the oxygen content and/or the moisture in the organic substances (1) and/or in the used air (4, 10) after issuing from the organic substances (1).

8. A process according to one of the preceding claims characterisd in that the cooled and dried used air is passed into the atmosphere through a filter (29), preferably a sorption filter, in particular a sorption filter bed (22) of compost and/or activated carbon.

9. A process according to one of the preceding claims characterised in that heat exchange occurs directly at the interfaces of the heat exchanger (9, 28) between the fresh air which is sucked in and the used air which is discharged.

10. A process according to one of the preceding claims characterised in that heat transportation from the used air to the fresh air is effected by a heat carrier medium in heat exchangers.

11. A process according to one of the preceding claims characterised in that after the cooling and drying steps a portion of the used air is mixed with the fresh air (20, 24), preferably downstream of the heat exchanger (9, 28) in the flow direction.

12. A process according to one of the preceding claims characterised in that the used air or a part of the used air is cooled by a cooling unit (32).

13. Apparatus for carrying out the process according to one of the preceding claims comprising a fermentation container (5) for accommodating the organic substances (1) to be processed, with a fresh air supply and a used air discharge for removal of the used air which is loaded with heat and moisture, wherein the fermentation container (5) is closed all around, there is provided a heat exchanger (9, 28) in which the heat of the used air is delivered to a heat transfer medium so that the moisture is condensed out of the used air in the form of a condensate (14), and wherein there are provided means for passing the used air which is dried by cooling through the condensate (14).

14. Apparatus according to claim 13 characterised in that the heat exchanger (9, 28) is an air-air heat exchanger and that the heat transfer medium is the fresh air which is supplied.

15. Apparatus according to claim 13 or claim 14 characterised in that the heat exchanger is an air-water heat exchanger.

16. Apparatus according to one of claims 13 to 15 characterised by a heat pump for using the heat removed and/or by a motor, preferably a vapour motor, for producing mechanical and/or electrical energy from the heat of the used air.

17. Apparatus according to one of claims 13 to 16 characterised by an ion exchanger or activated carbon filter or the like for producing drinking water from the condensate (14) from the moisture from the used air.

18. Apparatus according to one of claims 13 to 17 characterised by one or more measuring sensors for controlling the amount of fresh air and therewith the amount of oxygen supplied per unit of time in dependence on the temperature and/or the oxygen content and/or the moisture in the organic substances (1) and/or in the used air (4, 10) after issuing from the organic substances (1).

19. Apparatus according to one of claims 13 to 18 characterised by a filter container (29) with a filter, preferably a sorption filter, in particular sorption filter bed (22) of compost and/or activated carbon for filtration of the cooled and dried used air, wherein preferably the filter material (22) is mounted in the filter container (29) on surfaces (21) which are permeable to air.

20. Apparatus according to one of claims 13 to 19 characterised in that a throttle flap (11) is arranged in the air supply conduit upstream of the heat exchanger in flow direction and/or a throttle flap (30) is arranged in the used air conduit immediately upstream of the atmosphere in the flow direction.

21. Apparatus according to one of claims 13 to 20 characterised in that the fresh air space is formed around the fermentation space and that disposed in a freely set-up condition in said space are the used air-delimiting surfaces.

22. Apparatus according to one of claims 13 to 21 characterised in that heat exchanger, condensate collector, blower, sorption filter, measuring and control devices form a compact interrelated unit which respectively comprises only one air connection (12) for the supply of fresh air to the fermentation space (5) and one used air discharge (25) from the fermentation space (5).

23. Apparatus according to one of claims 13 to 22 characterised in that arranged in the used air conduit (10) is a selectively actuable control flap (34) which partially or entirely closes the used air conduit and which is adjoined by a by-pass conduit, and that disposed in the by-pass conduit is a cooling unit (32) for cooling the used air, from which unit the used air is passed to the heat exchanger (9, 28).

24. Apparatus according to one of claims 13 to 23 characterised by a closable and openable ventilation flap (24) for mixing cooled and dried used air with the fresh air supplied to the fermentation container (5), downstream of the heat exchanger (9, 28) in the flow direction.

25. Apparatus according to one of claims 13 to 24 characterised by a further heat exchanger for transfer of the heat of the used air by way of the heat carrier medium of the further heat exchanger to the fresh air which is supplied.

**Revendications**

1. Procédé d'hydrolyse, en particulier de compostage aérobie fermentatif de matières organiques (1) dans un récipient clos (5), dans lequel de l'air frais est amené aux matières organiques (1), dans lequel l'air sortant, chargé de chaleur et d'humidité, est évacué et refroidi, de sorte que l'humidité s'élimine par condensation sous forme d'un condensat (14) et dans lequel l'air sortant est évacué dans l'atmosphère à la température ambiante et sans humidité, caractérisé en ce que l'air sortant refroidi et séché est conduit à travers un bain d'eau, à savoir le condensat (14).

2. Procédé selon la revendication 1, caractérisé en ce que la chaleur de l'air sortant est transmise par un échangeur de chaleur air-air (9,28) à l'air frais amené.

3. Procédé selon la revendication 1 ou 2, caractérisé en ce que la chaleur de l'air sortant est évacuée à travers un échangeur de chaleur air-eau.

4. Procédé selon l'une des revendications précédentes, caractérisé en ce que la chaleur évacuée est directement utilisée et/ou utilisée par l'intermédiaire d'une pompe à chaleur.

5. Procédé selon l'une des revendications précédentes, caractérisé en ce que l'air sortant est amené à un moteur, de préférence à un moteur à vapeur, pour la production d'énergie mécanique et/ou électrique.

6. Procédé selon l'une des revendications précédentes, caractérisé en ce que le condensat (14) est utilisé pour l'arrosage de plantes et/ou pour la production d'eau potable au moyen d'échangeurs d'ions, de filtres à charbon actif ou analogues.

7. Procédé selon l'une des revendications précédentes, caractérisé en ce que la quantité d'air frais, ame-

EP 0 322 424 B1

née par unité de temps et, ainsi, la quantité d'oxygène est pilotée en fonction de la température et/ou de la teneur en oxygène et/ou de l'humidité dans les matières organiques (1) et/ou dans l'air sortant (4,10) après la sortie hors des matières organiques (1). '

8. Procédé selon l'une des revendications précédentes, caractérisé en ce que l'air sortant refroidi et séché est conduit dans l'atmosphère à travers un filtre (29), de préférence un filtre à sorption, en particulier un lit filtrant à sorption (22) en compost et/ou en charbon actif.

9. Procédé selon l'une des revendications précédentes, caractérisé en ce que l'échange de chaleur s'effectue directement sur les surfaces limites de l'échangeur de chaleur (9,28) entre l'air frais aspiré et l'air sortant évacué.

10. Procédé selon l'une des revendications précédentes, caractérisé en ce que le transport de chaleur de l'air sortant à l'air frais s'effectue par un agent caloporteur dans des échangeurs de chaleur.

11. Procédé selon l'une des revendications précédentes, caractérisé en ce qu'une quantité partielle de l'air sortant est ajoutée en mélange, après refroidissement et séchage, à l'air frais (20,24), de préférence après l'échangeur de chaleur (9,28) dans le sens d'écoulement.

12. Procédé selon l'une des revendications précédentes, caractérisé en ce que l'air sortant ou une partie de l'air sortant est refroidi par un appareil refroidisseur (32).

13. Dispositif pour l'exécution du procédé selon l'une des revendications précédentes, composé d'un récipient de fermentation (5) pour la réception des matières organiques à traiter (1) avec une amenée d'air frais et une évacuation d'air sortant pour l'évacuation de l'air sortant chargé de chaleur et d'humidité, le récipient de fermentation (5) étant fermé de tous côtés, un échangeur de chaleur (9,28) étant prévu, dans lequel la chaleur de l'air sortant est cédée à un agent caloporteur, de sorte que l'humidité provenant de l'air sortant est éliminée par condensation sous forme d'un condensat (14) et des systèmes étant prévus pour conduire l'air sortant séché par refroidissement à travers le condensat (14).

14. Dispositif selon la revendication 13, caractérisé en ce que l'échangeur de chaleur (9,28) est un échangeur de chaleur air-air et en ce que l'agent caloporteur est l'air frais amené.

15. Dispositif selon la revendication 13 ou 14, caractérisé en ce que l'échangeur de chaleur est un échangeur de chaleur air-eau.

16. Dispositif selon l'une des revendications 13 à 15, caractérisé par une pompe à chaleur pour l'exploitation de la chaleur évacuée et/ou par un moteur, de préférence un moteur à vapeur pour la production d'énergie mécanique et/ou électrique à partir de la chaleur de l'air sortant.

17. Dispositif selon l'une des revendications 13 à 16, caractérisé par un échangeur d'ions ou un filtre à charbon actif ou analogue pour la production d'eau potable à partir du condensat (14) de l'humidité de l'air sortant.

18. Dispositif selon l'une des revendications 13 à 17, caractérisé par un plusieurs capteurs de mesure pour le pilotage de la quantité d'air frais amenée par unité de temps et, par suite, de la quantité d'oxygène en fonction de la température et/ou de la teneur en oxygène et/ou de l'humidité dans les matières organiques (1) et/ou dans l'air sortant (4,10) après la sortie hors des matières organiques (1).

19. Dispositif selon l'une des revendications 13 à l8, caractérisé par un récipient à filtre (29) avec un filtre, de préférence un filtre à sorption, en particulier un lit filtrant à sorption (22) en compost et/ou en charbon actif pour le filtrage de l'air sortant refroidi et séché, la masse filtrante (22) dans le récipient à filtre (29) étant posée sur des plans perméables à l'air (21).

20. Dispositif selon l'une des revendications 13 à 19, caractérisé en ce que dans la conduite d'amenée d'air est monté un clapet d'étranglement (11) avant l'échangeur de chaleur dans le sens d'écoulement et/ou dans la conduite d'évacuation d'air est monté un clapet d'étranglement (30) immédiatement avant l'atmosphère dans le sens d'écoulement.

21. Dispositif selon l'une des revendications 13 à 20, caractérisé en ce que l'espace d'air frais est réalisé autour de l'espace de fermentation et en ce que dans cet espace sont librement dressées les surfaces délimitant l'air sortant.

22. Dispositif selon l'une des revendications 13 à 21, caractérisé en ce que l'échangeur de chaleur, le collecteur de condensat, le ventilateur, le filtre à sorption, les appareils de mesure et de pilotage forment une unité cohérente compacte qui comporte seulement respectivement un raccordement d'air (12) pour l'amenée d'air frais à l'espace de fermentation (5) et une évacuation d'air sortant (25) hors de l'espace de fermentation (5).

23. Dispositif selon l'une des revendications 13 à 22, caractérisé en ce que dans la conduite d'air sortant (10) est monté un clapet de commande (34) sélectivement actionnable et obturant entièrement ou partiellement la conduite d'air sortant, auquel se raccorde une conduite de dérivation et en ce que dans la conduite de dérivation est monté un appareil refroidisseur (32) pour le refroidissement de l'air sortant, depuis lequel l'air sortant est amené à l'échangeur de chaleur (9,28).

24. Dispositif selon l'une des revendications 13 à 23, caractérisé par un clapet d'aération obturable et pilo-

11

table (24) pour l'addition en mélange d'air sortant refroidi et séché à l'air frais amené au réservoir de fermentation (5) après l'échangeur de chaleur (9,28) dans le sens d'écoulement.

25. Dispositif selon l'une des revendications 13 à 24, caractérisé par un échangeur de chaleur supplémentaire pour la transmission de la chaleur de l'air sortant par l'intermédiaire de l'agent caloporteur de l'échangeur de chaleur supplémentaire à l'air frais amené.